# EUROPÄISCHE PATENTSCHRIFT

(11) **EP 0 721 925 B1**
(45) Veröffentlichungstag und Bekanntmachung des Hinweises auf die Patenterteilung: **07.04.1999**
(21) Anmeldenummer: 95119786.2
(22) Anmeldetag: 15.12.1995
(51) Int. Cl.: C04B 35/593, C04B 35/58, C04B 35/584

(54) **Dichter Siliciumnitrid-Kompositwerkstoff und Verfahren zu seiner Herstellung**
Dense silicon nitride composite material and method of making it
Matériau composite dense en nitrure de silicium et procédé pour sa fabrication

(30) Priorität: 13.01.1995 DE 19500832
(43) Veröffentlichungstag der Anmeldung: 17.07.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: Klemm, Hagen, Dr., D-01309 Dresden (DE); Herrmann, Mathias, Dr., D-01662 Meissen (DE); Tangermann, Katja, D-01277 Dresden (DE); Schubert, Christian, Dr., D-01326 Dresden (DE)

(56) Entgegenhaltungen:
- EP-A- 0 479 214
- EP-A- 0 520 211

## Beschreibung

Die Erfindung bezieht sich auf das Gebiet der Konstruktionskeramik und betrifft einen dichten Siliziumnitrid-Kompositwerkstoff auf der Basis von polykristallinen Siliziumnitridsinterkörpern, die als Hochtemperaturbauteile im Armaturen-und Motorenbau sowie in der Energietechnik zur Anwendung kommen können und ein Verfahren zur Herstellung eines derartigen Werkstoffs.

Keramische Werkstoffe sind in ihrem Potential bezüglich höherer Einsatztemperaturen den metallischen Superlegierungen deutlich überlegen. Besonders geeignet für den Einsatz bei hohen Temperaturen sind dabei Siliziumnitridwerkstoffe, die sich durch exzellente mechanische Eigenschaften sowohl bei Raumtemperatur als auch bei hohen Temperaturen auszeichnen.

Einer der wesentlichsten Nachteile dieser Materialien ist die unzureichende chemische Beständigkeit gegenüber Sauerstoff bei hohen Temperaturen. Üblicherweise wird versucht, durch Modifizierung der Korngrenzenphase in den Werkstoffen (Zusammensetzung bzw. Kristallisation der amorphen Glasphase) oder die durch Kombination verschiedener Werkstoffe eine Erhöhung der Oxidationsbeständigkeit (Minimierung der relativen Massenzunahme) zu erreichen. Allerdings kommt es auch bei nur sehr kleinen Oxidationsraten zu großen Schädigungen durch Riß- bzw. Porenbildung an den insbesondere durch Dehnung beanspruchten Oberflächen des Werkstoffes, die zu einem schnellen Versagen des Bauteils führen können. Durch derartige Schädigungen wird die Lebensdauer eines solchen Bauteils oftmals wesentlich verringert, so daß vor allem die Anwendungen, die eine hohe Standdauer erfordern, nicht durch diese Bauteile realisiert werden können( J. Am. Ceram. Soc. 76(11)2919-2922 (1993)).

Um diese Schädigungen einzuschränken und die Festigkeit der Werkstoffe nach einer Hochtemperaturbehandlung bis 1200 °C zu erhöhen sind Versuche unternommen worden ( EP 0073523). Dabei wurden einem Siliziumnitridwerkstoff Silizide in Form von Mg₂Si, CaSi₂, VSi₂, CrSi₂, MnSi, ZrSi₂, NbSi₂, MoSi₂, TaSi₂, WSi₂ in einer Menge von 0,1 bis 5 Gew.-% zugegeben. Die damit erreichten Ergebnisse zeigten Verbesserungen bei der Festigkeit dieser Werkstoffe gegenüber vergleichbaren Versuchen mit Werkstoffen nach dem Stand der Technik. Trotzdem sind diese Ergebnisse noch nicht ausreichend für eine Anwendung derartiger Materialien als Bauteile für den Einsatz bei höheren Temperaturen und langen Standzeiten.

Weiterhin ist nach EP 0 520211 A1 eine Siliciumnitridkeramik und ein Verfahren zu deren Herstellung bekannt, das (a) 20 - 98 % Siliciumnitrid und (b) 0,02 - 20 % Sinterhilfsmittel (Oxide, Nitride oder Silicate eines der Elemente der Gruppe 2, 3, 4, 13 oder der Lanthanide) enthält und weiterhin 1 - 80 % Mo₅Si₃, wobei das Siliciumnitrid bis zu 50 % durch andere feuerfeste Karbide oder Nitride ersetzt sein kann. Diese Siliciumnitridkeramik wird bei Temperaturen von 1300 °C - 1700 °C hergestellt.
Aufgrund der eingesetzten Ausgangsstoffe und der Verfahrensparameter entsteht neben dem Siliciumnitrid in der Keramik nur Mo₅Si₃ als weitere Phase.

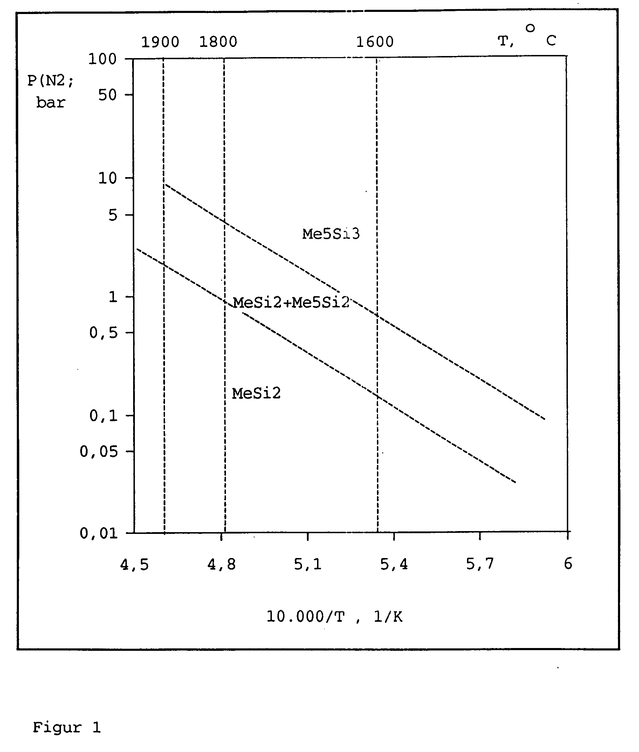

Nach der EP 0 479 214 ist weiterhin ein keramisches Sinterprodukt und ein Verfahren zu deren Herstellung bekannt. Das Sinterprodukt besteht aus (a) 40 - 98 % Siliciumnitrid, aus (b) 2 - 60 % an Siliciden von Eisen, Nickel und Cobalt und (c bis 20 % eines Oxides, Nitrides oder Silicates eines der Elemente der Gruppe 2, 3, 4, 13 oder der Lanthanide und ist dadurch charakterisiert, daß das α-/β-Verhältnis des Siliciumnitrids im Sinterprodukt in den Bereich A der Fig. 1 fällt. Ein derartiges Sinterprodukt wird auch bei Temperaturen von 1300 °C - 1700 °C hergestellt.

Der Erfindung liegt die Aufgabe zugrunde, einen dichten Siliziumnitrid-Kompositwerkstoff und ein Verfahren zu seiner Herstellung anzugeben, der auch bei höheren Temperaturen eine hohe Lebensdauer und Zuverlässigkeit aufweist.

Die Aufgabe wird durch die in den Ansprüchen angegebene Erfindung gelöst.

Der erfindungsgemäße dichte Siliziumnitrid-Kompositwarkstoff enthält einen Anteil von 3 bis 50 Ma.-% einer Verstärkungskomponente, wobei die Verstärkungskomponente aus einem Gemisch aus Metallsilizidphasen mit 10 bis 90 Ma.-% Me₅Si₃ und 90 bis 10 Ma.-% MeSi₂ oder MeSi₂ und Silizide anderer Stöchiometrien besteht, wobei davon wiederum 10 bis 90 Ma.-% MeSi₂ und 90 bis 10 Ma.-% Silizide anderer Stöchiometrien sind, und wobei Me ein Metall der Gruppe oder eine Mischung aus Metallen der Gruppe Molybdän, Wolfram, Chrom, Tantal, Niob, Mangan oder Vanadium ist.

Vorteilhafterweise ist die Verstärkungskomponente zu 5 bis 40 Ma.-% enthalten.

Vorteilhafterweise ist Me₅Si₃ mit 3 bis 10 Ma.-%, bezogen auf den Kompositwerkstoff, enthalten.

Vorteilhafterweise ist MeSi₂ mit 8 bis 20 Ma.-%, bezogen auf den Kompositwerkstoff, enthalten.

Vorteilhafterweise sind MeSi₂ und Silizide anderer Stöchiometrien mit 10 bis 30 Ma.-%, bezogen auf den Kompositwerkstoff, enthalten.

Weiterhin ist vorteilhafterweise das Metall Molybdän.

Es ist weiterhin vorteilhaft, daß in dem erfindungsgemäßen Werkstoff ein oder mehrere Sinterhilfsmittel enthalten sind.

Und es ist auch vorteilhaft, daß weitere Verstärkungskomponenten in Form von SiC, TiN, TiC oder BN enthalten sind.

Bei dem erfindungsgemäßen Verfahren zur Herstellung eines dichten Siliziumnitrid-Kompositwerkstoffes mit 3 bis 50 Ma.-% einer Verstärkungskomponente enthaltend ein Gemisch aus Metallsiliziden mit 10 bis 90 Ma.-% Me₅Si₃ und 90 bis 10 Ma.-% MeSi₂ oder MeSi₂ und Silizide anderer Stöchiometrien, wobei davon wiederum 10 bis 90 Ma.-% MeSi₂ und 90 bis 10 Ma.-% Silizide anderer Stöchiometrien sind und wobei Me ein Metall der Gruppe oder eine Mischung aus Metallen der Gruppe Molybdän, Wolfram, Chrom, Tantal, Niob, Mangan oder Vanadium ist, wird der Werkstoff durch Sintern und/oder Heißpressen und/oder heißisostatisches Pressen hergestellt und die Verstärkungskomponente wird in Form von Metallsilizid-Pulver auf pulvermetallurgischem Wege zugegeben oder als eine Vorstufe der Metallsilizide, wobei dabei bis zum Erreichen der geschlossenen Porosität ein Stickstoff/Temperatur-Verhältnis entsprechend dem bekannten Zusammenhang nach Figur 1 eingestellt wird, das zur Bildung und Stabilisierung von Me₅Si₃ führt.

Vorteilhafterweise werden Me₅Si₃ und MeSi₂ aus einem ihrer Vorstufen während der Plasma- oder Gasphasensynthese des Siliziumnitridpulver mit Metalldotierungen gebildet.

Weiterhin vorteilhafterweise werden Me₅Si₃ und MeSi₂ aus einem ihrer Vorstufen über chemische Synthesen durch Zersetzung von siliziumorganischen Precursoren mit Metallionen gebildet.

Ebenfalls vorteilhafterweise werden Me₅Si₃ und MeSi₂ aus einem ihrer Vorstufen durch Reduktion von aufgefällten oxidischen Verbindungen der Metalle gebildet.

Und weiterhin vorteilhafterweise werden Me₅Si₃ und MeSi₂ auf pulvermetallurgischem Wege aus Metallen oder Metallcarbiden oder Metallboriden oder Metallnitriden gebildet.

Derartig erfindungsgemäß hergestellte erfindungsgemäße Siliziumnitrid-Kompositwerkstoffe zeigen unter bestimmten Bedingungen auch verbesserte Kriecheigenschaften.

Im weiteren wird die Erfindung an mehreren Ausführungsbeispielen erläutert.
Dabei stellen die Beispiele 1 und 2 den Stand der Technik dar.
In Beispiel 6 ist die beste Ausführungsform angegeben.
Die gemessenen Werte der Beispiele 1 - 6 sind in Tabelle 1 angegeben.
Die gemessenen Werte der Beispiele 7 - 9 sind in Tabelle 2 angegeben.
Figur 1 gibt den bekannten Zusammenhang von Stickstoffdruck und Temperatur für die Bildung von verschiedenen Phasen von Metallsiliziden an.

### Beispiel 1

Si₃N₄-Pulver wird mit 12 Ma.-% Nd₂O₃ und 0,5 Ma.-% AlN in einer Planetenkugelmühle in Isopropanol gemischt und in einem Vakuumrotationsverdampfer getrocknet und bei 450 °C ausgeheizt. Danach wird die Pulvermischung bei 1800 °C heißgepreßt. Aus dem so hergestellten Werkstoff werden Biegebruchstäbe hergestellt, die anschließend einem Standzeittest an Luft bei 1400 °C und 300 MPa unterzogen werden.

### Beispiel 2

Si₃N₄-Pulver wird mit 10 Ma.-% Y₂O₃ in einer Planetenkugelmühle in Isopropanol gemischt und in einem Laborrotationsverdampfer getrocknet. Anschließend wird das Pulver kaltisostatisch in Barren von 25 x 25 x 60 mm bei 200 MPa gepreßt. Diese Barren werden bei 1900 °C unter einem N₂-Druck von 100 bar im Verlauf von 2 h gesintert. Aus dem so hergestellten Werkstoff werden Biegebruchstäbe hergestellt, die anschließend einem Standzeittest an Luft bei 1400 °C und 300 MPa unterzogen werden.

### Beispiel 3

Si₃N₄-Pulver wird mit 12 Ma.-% Nd₂O₃ und 0,5 Ma.-% AlN und 10 Ma.-% MoSi₂ in einer Planetenkugelmühle in Isopropanol gemischt und in einem Vakuumrotationsverdampfer getrocknet und bei 450 °C ausgeheizt. Anschließend erfolgt die Sinterung bei 1900 °C unter einem N₂-Druck von 100 bar im Verlaufe von 2 h. Aus dem so hergestellten Werkstoff werden Biegebruchstäbe hergestellt, die einem Standzeittest an Luft bei 1400 °C und 300 MPa unterzogen werden.

### Beispiel 4

Si₃N₄-Pulver wird mit 12 Ma.-% Nd₂O₃ und 0,5 Ma.-% AlN und 10 Ma.-% Mo₂C in einer Planetenkugelmühle in Isopropanol gemischt und in einem Vakuumrotationsverdampfer getrocknet und bei 450 °C ausgeheizt. Danach wird die Pulvermischung bei 1800 °C heißgepreßt. Aus dem so hergestellten Werkstoff werden Biegebruchstäbe hergestellt, die einem Standzeittest an Luft bei 1400 °C und 300 MPa unterzogen werden.

### Beispiel 5

Si₃N₄-Pulver wird mit 12 Ma.-% Nd₂O₃ und 0,5 Ma.-% AlN und 15 Ma.-% W in einer Planetenkugelmühle in Isopropanol gemischt und in einem Vakuumrotationsverdampfer getrocknet und bei 450 °C ausgeheizt. Danach wird die Pulvermischung bei 1800 °C heißgepreßt. Aus dem so hergestellten Werkstoff werden Biegebruchstäbe hergestellt, die einem Standzeittest an Luft bei 1400 °C und 300 MPa unterzogen werden.

### Beispiel 6

Si₃N₄-Pulver wird mit 10 Ma.-% Y₂O₃ und 10 Ma.-% MoSi₂ in einer Planetenkugelmühle in Isopropanol gemischt und in einem Laborrotationsverdampfer getrocknet. Anschließend wird das Pulver kaltisostatisch in Barren von 25 x 25 x 60 mm bei 200 MPa gepreßt. Diese Barren werden bei 1900 °C unter einem N₂-Druck von 100 bar im Verlauf von 2 h gesintert. Aus dem so hergestellten Werkstoff werden Biegebruchstäbe hergestellt, die anschließend einem Standzeittest an Luft bei 1400 °C und 300 MPa unterzogen werden.

**Tabelle 1**

| Ergebnisse des Standzeittestes an Luft bei 1400 °C und 300 MPa | | | |
|---|---|---|---|
| Beispiel | Verhältnis MeSi₂/MeSi₂+Me₅Si₃ | Massezunahme nach 1000 h Oxidat.bei 1400 °C in mg/cm² | Zeit bis zum Versagen bei Standzeittest |
| 1 | 0 | 1,7 | 47 h |
| 2 | 0 | 1,9 | 37 h |
| 3 | 0,5 | 3,8 | nach 200 h kein Versagen |
| 4 | 0,2 | 3,0 | 179 h |
| 5 | 0,7 | 4,1 | 198 h |
| 6 | 0,3 | 0,8 | nach 700 h kein Versagen |

### Beispiel 7

Si₃N₄-Pulver mit 12 Ma.-% Y₂O₃ wird mit 10 Ma.-% eines Gemisches aus MoSi₂ und WSi₂ in einer Planetenkugelmühle in Isopropanol gemischt, in einem Vakuumrotationsverdampfer getrocknet und bei 450 °C ausgeheizt. Danach wird die Pulvermischung bei 1800 °C heißgepreßt. Aus dem so hergestellten Werkstoff werden Biegebruchstäbe hergestellt, die anschließend einem Standzeittest an Luft bei 1400 °C und 450 MPa unterzogen werden.

### Beispiel 8

Si₃N₄-Pulver mit 12 Ma.-% Y₂O₃ wird mit 10 Ma.-% eines Gemisches aus MoSi₂ und WSi₂ in einer Planetenkugelmühle in Isopropanol gemischt, in einem Vakuumrotationsverdampfer getrocknet und bei 450 °C ausgeheizt. Danach wird die Pulvermischung bei 1800 °C heißgepreßt. Aus dem so hergestellten Werkstoff werden Biegebruchstäbe hergestellt, die anschließend einem Standzeittest an Luft bei 1450 °C und 300 MPa unterzogen werden.

### Beispiel 9

Si₃N₄-Pulver mit 12 Ma.-% Y₂O₃ wird mit 20 Ma.-% eines Gemisches aus VSi₂ und WSi₂ in einer Planetenkugelmühle in Isopropanol gemischt, in einem Vakuumrotationsverdampfer getrocknet und bei 450 °C ausgeheizt. Danach wird die Pulvermischung bei 1800 °C heißgepreßt. Aus dem so hergestellten Werkstoff werden Biegebruchstäbe hergestellt, die anschließend einem Standzeittest an Luft bei 1400 °C und 450 MPa unterzogen werden.

**Tabelle 2**

| Ergebnisse des Standzeittestes an Luft | | | |
|---|---|---|---|
| Beispiel | Verhältnis der Silizidphasen in Ma.-% | Massezunahme nach 1000 h Oxidat.bei 1400 °C in mg/cm² | Zeit bis zum Versagen bei Standzeittest |
| 7 | 3 % WSi₂ + 4 % MoSi₂ + 3 % Mo₅Si₃ | 0,8 | bei 1400 °C und 450 MPa nach 500 h noch kein Versagen |
| 8 | 3 % WSi₂ + 4 % MoSi₂ + 3 % Mo₅Si₃ | 0,8 | bei 1450 °C und 300 MPa nach 500 h noch kein Versagen, |
| 9 | 10 % VSi₂ + 5 % WSi₂ + 5 % W₅Si₃ | 0,7 | bei 1400 °C und 450 MPa nach 500 h noch kein Versagen |

## Patentansprüche

1. Dichter Siliziumnitrid-Kompositwerkstoff enthaltend einen Anteil von 3 bis 50 Ma.-% einer Verstärkungskomponente, wobei die Verstärkungskomponente aus einem Gemisch aus Metallsilizidphasen mit 10 bis 90 Ma.-% Me₅Si₃ und 90 bis 10 Ma.-% MeSi₂ oder MeSi₂ und Silizide anderer Stöchiometrien besteht, wobei davon wiederum 10 bis 90 Ma.-% MeSi₂ und 90 bis 10 Ma.-% Silizide anderer Stöchiometrien sind, und wobei Me ein Metall der Gruppe oder eine Mischung aus Metallen der Gruppe Molybdän, Wolfram, Chrom, Tantal, Niob, Mangan oder Vanadium ist.

2. Werkstoff nach Anspruch 1, bei dem die Verstärkungskomponente zu 5 bis 40 Ma.-% enthalten ist.

3. Werkstoff nach Anspruch 1, bei dem Me₅Si₃ mit 3 bis 10 Ma.-%, bezogen auf den Kompositwerkstoff, enthalten ist.

4. Werkstoff nach Anspruch 1, bei dem MeSi₂ mit 8 bis 20 Ma.-%, bezogen auf den Kompositwerkstoff, enthalten ist.

5. Werkstoff nach Anspruch 1, bei dem MeSi₂ und Silizide anderer Stöchiometrien mit 10 bis 30 Ma.-%, bezogen auf den Kompositwerkstoff, enthalten sind.

6. Werkstoff nach Anspruch 1, bei dem das Metall Molybdän ist.

7. Werkstoff nach Anspruch 1, bei dem ein oder mehrere Sinterhilfsmittel enthalten sind.

8. Werkstoff nach Anspruch 1, bei dem weitere Verstärkungskomponenten in Form von SiC, TiN, TiC oder BN enthalten sind.

9. Verfahren zur Herstellung eines dichten Siliziumnitrid-Kompositwerkstoffes, der 3 bis 50 Ma.-% einer Verstärkungskomponente, enthaltend ein Gemisch aus Metallsiliziden mit 10 bis 90 Ma.-% Me₅Si₃ und 90 bis 10 Ma.-% MeSi₂ oder MeSi₂ und Silizide anderer Stöchiometrien, wobei davon wiederum 10 bis 90 Ma.-% MeSi₂ und 90 bis 10 Ma.-% Silizide anderer Stöchiometrien sind und wobei Me ein Metall der Gruppe oder eine Mischung aus Metallen der Gruppe Molybdän, Wolfram, Chrom, Tantal, Niob, Mangan oder Vanadium ist, bei dem der Werkstoff durch Sintern und/oder Heißpressen und/oder heißisostatisches Pressen hergestellt wird und die Verstärkungskomponente in Form von Metallsilizid-Pulver auf pulvermetallurgischem Wege zugegeben wird oder als eine Vorstufe der Metallsilizide, wobei dabei bis zum Erreichen der geschlossenen Porosität ein Stickstoff/Temperatur-Verhältnis entsprechend dem bekannten Zusammenhang nach Figur 1 eingestellt wird, das zur Bildung und Stabilisierung von Me₅Si₃ führt.

10. Verfahren nach Anspruch 9, bei dem Me₅Si₃ und MeSi₂ aus einem ihrer Vorstufen während der Plasma- oder Gasphasensynthese des Siliziumnitridpulver mit Metalldotierungen gebildet werden.

11. Verfahren nach Anspruch 9, bei dem Me₅Si₃ und MeSi₂ aus einem ihrer Vorstufen über chemische Synthesen durch Zersetzung von siliziumorganischen Precursoren mit Metallionen gebildet werden.

12. Verfahren nach Anspruch 9, bei dem Me₅Si₃ und MeSi₂ aus einem ihrer Vorstufen durch Reduktion von aufgefällten oxidischen Verbindungen der Metalle gebildet werden.

13. Verfahren nach Anspruch 9, bei dem Me₅Si₃ und MeSi₂ auf pulvermetallurgischem Wege aus Metallen oder Metallcarbiden oder Metallboriden oder Metallnitriden gebildet werden.

## Claims

1. Dense silicon nitride composite material containing a proportion of 3 to 50% by mass of a strengthening component, said strengthening component comprising a mixture of metal silicide phases with 10 to 90% by mass Me₅Si₃ and 90 to 10% by mass MeSi₂ or MeSi₂ and silicides of other stoichiometries, there being therefrom in turn 10 to 90% by mass MeSi₂ and 90 to 10% by mass of silicides of other stoichiometries and Me being a metal from the group or a mixture of metals from the group molybdenum, tungsten, chromium, tantalum, niobium, manganese or vanadium.

2. Material according to Claim 1 in which the strengthening component is kept between 5 and 40% by mass.

3. Material according to Claim 1 in which Me₅Si₃ is contained with between 3 to 10% by mass relative to the composite material.

4. Material according to Claim 1 in which MeSi₂ is contained with between 8 to 20% by mass relative to the composite material.

5. Material according to Claim 1 in which MeSi₂ and silicides of other stoichiometries are contained with between 10 to 30% by mass relative to the composite material.

6. Material according to Claim 1 in which the metal is molybdenum.

7. Material according to Claim 1 in which one or several sintering aids are contained.

8. Material according to Claim 1 in which further strengthening components are contained in the form of SiC, TiN, SiC or BN.

9. Method for producing a dense silicon nitride composite material which is 3 to 50% by mass of a strengthening component containing a mixture of metal silicides with 10 to 90% by mass of Me₅Si₃ and 90 to 10% by mass of MeSi₂ or MeSi₂ and silicides of other stoichiometries, there being in turn 10 to 90% by mass therefrom of MeSi₂ and 90 to 10% by mass of silicides of other stoichiometries and Me being a metal of the group or a mixture of metals of the group molybdenum, tungsten, chromium, tantalum, niobium, manganese or vanadium, in which the material is produced by sintering and/or hot-pressing and/or high temperature isostatic pressing and the strengthening component is added in the form of metal silicide powder using powder metallurgy technology or as a preliminary stage of the metal silicides, a nitrogen/temperature ratio corresponding to the known interrelationship according to Figure 1 being set until sealed porosity is attained, said ratio leading to the formation and stabilisation of Me₅Si₃.

10. Method according to Claim 9 in which Me₅Si₃ and MeSi₂ are formed from one of their preliminary stages during plasma or gas phase synthesis of the silicon nitride powder with metal dopants.

11. Method according to Claim 9 in which Me₅Si₃ and MeSi₂ are formed from one of their preliminary stages via chemical synthesis by decomposition of silicon organic precursors by metal ions.

12. Method according to Claim 9 in which Me₅Si₃ and MeSi₂ are formed from one of their preliminary stages by reduction of incident oxidic compounds of the metals.

13. Method according to Claim 9 in which Me₅Si₃ and MeSi₂ are formed from metals or metal carbides or metal borides or metal nitrides using powder metallurgy technology.

## Revendications

1. Matériau composite dense en nitrure de silicium contenant une proportion de 3 à 50 % en masse d'un composant de renforcement, le composant de renforcement se composant d'un mélange de phases de siliciures métalliques avec de 10 à 90 % en masse de Me₅Si₃ et 90 à 10 % en masse de MeSi₂ ou de MeSi₂ et siliciures d'autres stoechiométries, ou sont à nouveau 10 à 90 % en masse de MeSi₂ et 90 à 10 % en masse de siliciures d'autres stoechiométries et Me est un métal du groupe ou un mélange de métaux du groupe du molybdène, tungstènes, chrome, tantale, niobium, manganèse ou vanadium.

2. Matériau selon la revendication 1, dans lequel le composant de renforcement est contenu de 5 à 40 % en masse.

3. Matériau selon la revendication 1, dans lequel est contenu Me₅Si₃ avec 3 à 10 % en masse par rapport au matériau composite.

4. Matériau selon la revendication 1, dans lequel est contenu MeSi₂ avec 8 à 20 % en masse par rapport au matériau composite.

5. Matériau selon la revendication 1, dans lequel est contenu MeSi₂ et des siliciures d'autres stoechiométries avec 10 à 30 % en masse par rapport au matériau composite.

6. Matériau selon la revendication 1, dans lequel le métal est le molybdène.

7. Matériau selon la revendication 1, dans lequel sont contenus un ou plusieurs adjuvants de frittage.

8. Matériau selon la revendication 1, dans lequel sont contenus d'autres composants de renforcement sous la forme de SIC, TIN, TIC ou BN.

9. Procédé de fabrication d'un matériau dense composite en nitrure de silicium, de 3 à 50 % en masse d'un composant de renforcement, contenant un mélange de siliciures métalliques avec de 10 à 90 % en masse de Me₅Si₃ et 90 à 10 % en masse de MeSi₂ ou de MeSi₂ et siliciures d'autres stoechiométries, ou sont à nouveau 10 à 90 % en masse de MeSi₂ et 90 à 10 % en masse de siliciures d'autres stoechiométries et Me étant un métal du groupe ou un mélange de métaux du groupe molybdène, tungstène, chrome, tantale, niobium, manganèse ou vanadium, procédé dans lequel le matériau est fabriqué par frittage et/ou pressage à chaud et/ou pressage isostatique à chaud et le composant de renforcement est ajouté sous la forme de poudre de siliciure métallique par des méthodes de la métallurgie des poudres ou comme un progéniteur des siliciures métalliques, en outre jusqu'à l'obtention de la porosité fermée un rapport azote/température étant ajusté en correspondance de la relation connue selon la figure 1, rapport qui conduit à la formation et stabilisation de Me₅Si₃.

10. Procédé selon la revendication 9, dans lequel Me₅Si₃ et MeSi₂ sont formés à partir d'un de leurs progéniteurs pendant le synthèse de plasma ou de phases gazeuses de la poudre de nitrure de silicium avec des dopages métalliques.

11. Procédé selon la revendication 9, dans lequel Me₅Si₃ et MeSi₂ sont formés à partir d'un de leurs progéniteurs par l'intermédiaire de synthèses chimiques par décomposition de précurseurs silicio-organiques avec des ions métalliques.

12. Procédé selon la revendication 9, dans lequel Me₅Si₃ et MeSi₂ sont formés à partir d'un de leurs progéniteurs par réduction de composés des métaux précipités par voie d'oxydation.

13. Procédé selon la revendication 9, dans lequel Me₅Si₃ et MeSi₂ sont formés par des méthodes de la métallurgie des poudres à partir de métaux ou de carbures métalliques ou de borures métalliques ou de nitrures métalliques.
